# EUROPEAN PATENT APPLICATION

(11) **EP 4 708 500 A1**
(43) Date of publication of application: **11.03.2026**
(21) Application number: 25193312.3
(22) Date of filing: 01.08.2025
(51) Int. Cl.: H01M 50/231, H01M 50/242

(54) **BOTTOM PROTECTION PLATE, BATTERY PACK AND POWER-CONSUMING DEVICE**

(30) Priority: 06.09.2024 CN 202422199581 U; 09.09.2024 CN 202422211865 U; 05.12.2024 WO PCT/CN2024/136952
(71) Applicant: Eve Energy Co., Ltd., Huizhou, Guangdong 516006 (CN)
(72) Inventor: HUANG, Shenhua, Huizhou, Guangdong, 516006 (CN)
(74) Representative: Berggren Oy

(57) **Abstract**

A bottom protection plate, a battery pack, and a power-consuming device are provided in the present application. The bottom protection plate includes a protective outer layer, an impact-resistant layer, and an energy-absorbing layer. The protective outer layer has a first fiber-reinforced composite layer and a second fiber-reinforced composite layer spaced from each other, the impact-resistant layer is disposed between the first fiber-reinforced composite layer and the second fiber-reinforced composite layer, and the energy-absorbing layer is sandwiched between the first fiber-reinforced composite layer and the impact-resistant layer.

## Description

### TECHNICAL FIELD

The present application relates to the technical field of batteries, and more particularly, to a bottom protection plate, a battery pack, and a power-consuming device.

### BACKGROUND

In related arts, a bottom protection plate is provided at bottom of a battery pack. The bottom protection plate is provided to protect battery cores in the battery pack when the bottom of the battery pack is impacted by a foreign object, to avoid a safety accident caused by damage to the battery pack.

Currently, impact resistance of the bottom protection plate is weak, and impact force is easily transmitted to the battery cores in the battery pack through the bottom protection plate, thereby causing damage to the battery cores.

### SUMMARY

In a first aspect, embodiments of the present application provide a bottom protection plate including a protective outer layer, an impact-resistant layer, and an energy-absorbing layer. The protective outer layer includes a first fiber-reinforced composite layer and a second fiber-reinforced composite layer spaced from each other, the impact-resistant layer is disposed between the first fiber-reinforced composite layer and the second fiber-reinforced composite layer, and the energy-absorbing layer is sandwiched between the first fiber-reinforced composite layer and the impact-resistant layer.

According to a second aspect, embodiments of the present application provide a battery pack including the bottom protection plate of the embodiments.

According to a third aspect, embodiments of the present application provide a power-consuming device including the battery pack.

### BRIEF DESCRIPTION OF THE DRAWINGS

FIG. 1 is a perspective view of a bottom protection plate according to some embodiments of the present application;
FIG. 2 is a structural exploded view of a bottom protection plate according to some embodiments of the present application;
FIG. 3 is a cross-sectional view of a bottom protection plate according to some embodiments of the present application;
FIG. 4 is a schematic structural diagram of an energy-absorbing layer in a bottom protection plate according to some embodiments of the present application; and
FIG. 5 is a structural sectional view of a battery pack according to some embodiments of the present application.

### Reference Numerals:

100. bottom protection plate; 10. protective outer layer; 11. first fiber-reinforced composite layer; 12. second fiber-reinforced composite layer; 20. impact-resistant layer; 30. energy-absorbing layer; 31. drainage channel; 311. first drainage channel; 312, second drainage channel; 200. battery pack; 210. case; and 220. battery core.

### DETAILED DESCRIPTION OF THE EMBODIMENTS

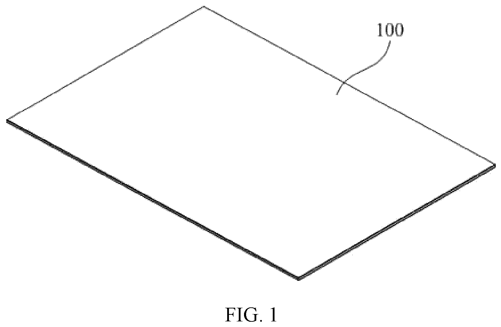

To relieve the transmittance of the external impact force easily to the battery cores in the battery pack through the bottom protection plate, according to the first aspect of the present application, as shown in FIG. 1 to FIG. 3, a bottom protection plate 100 is provided. The bottom protection plate 100 includes a protective outer layer 10, an impact-resistant layer 20, and an energy-absorbing layer 30. The protective outer layer 10 includes a first fiber-reinforced composite layer 11 and a second fiber-reinforced composite layer 12. The impact-resistant layer 20 is disposed between the first fiber-reinforced composite layer 11 and the second fiber-reinforced composite layer 12. The energy-absorbing layer 30 is sandwiched between the first fiber-reinforced composite layer 11 and the impact-resistant layer 20.

In the present embodiment, the protective outer layer 10 is composed of a first fiber-reinforced composite layer 11 and a second fiber-reinforced composite layer 12, the first fiber-reinforced composite layer 11 and the second fiber-reinforced composite layer 12 are surface layers of the bottom protection plate 100. Both the first fiber-reinforced composite layer 11 and the second fiber-reinforced composite layer 12 are composite materials formed by a forming process in which the reinforcing fiber material and the matrix material are wound, molded, or pultruded. The reinforcing fiber material may be glass fiber, carbon fiber, aramid fiber, and the like, and the matrix material may be resin, metal, ceramic, and the like. The reinforcing fiber and the matrix material used in the first fiber-reinforced composite layer 11 may be the same as or different from the second fiber-reinforced composite layer 12, and the specific composition may be flexibly selected as required.

It should be noted that the fiber-reinforced composite material has characteristics of high strength, light weight, corrosion resistance, and the like. The fiber-reinforced composite material also has good insulation in a case that the reinforcing fiber in the fiber-reinforced composite material is glass fiber or aramid fiber, and the matrix material is a resin. Therefore, with using the first fiber-reinforced composite layer 11 and the second fiber-reinforced composite layer 12 as the surface layers of the bottom protection plate 100, the bottom protection plate 100 not only has the effects of insulation, wear resistance, and puncture resistance, but also can protect the impact-resistant layer 20 and the energy-absorbing layer 30. As such, the impact-resistant layer 20 and the energy-absorbing layer 30 are avoided from corrosion. Further, it is unnecessary to spray an insulating coating on the bottom protection plate 100, thereby reducing the production cost.

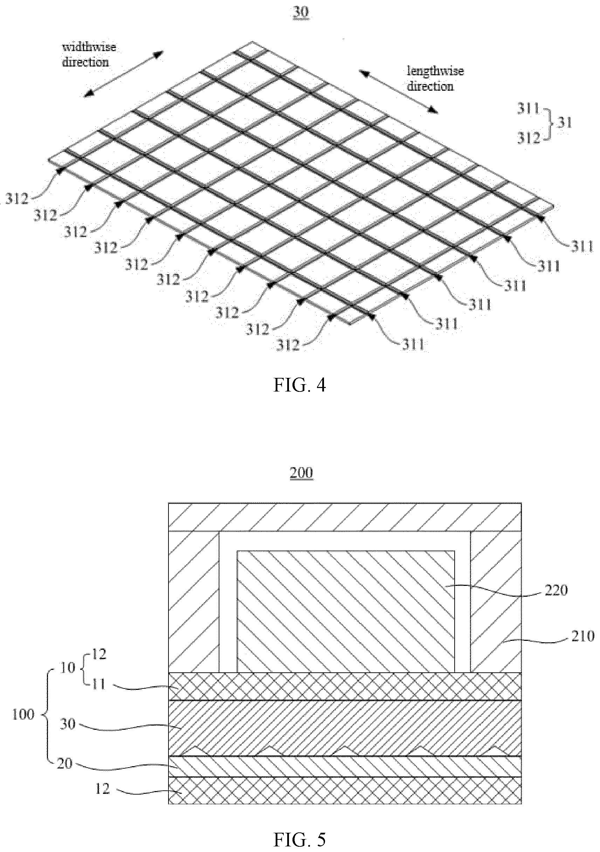

As shown in FIG. 5, when the bottom protection plate 100 is assembled to the case 210 in the battery pack 200, the first fiber-reinforced composite layer 11 may be brought closer to the battery cores 220 than the second fiber-reinforced composite layer 12, that is, the battery cores 220 may be directly placed on the first fiber-reinforced composite layer 11.

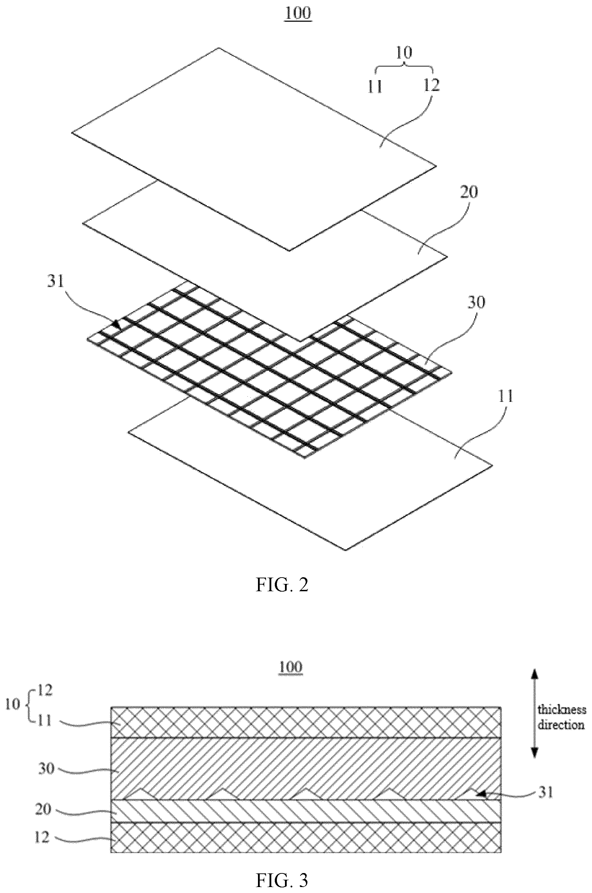

As shown in FIG. 2 or FIG. 3, the bottom protection plate 100 of the present application further includes the impact-resistant layer 20 having a certain strength and toughness to resist external impact force, and the material of the impact-resistant layer 20 may be a metal plate having certain strength such as a steel plate, an alloy plate (such as a titanium alloy or a magnesium-aluminum alloy), or the like. In a case where a vehicle passes a road with raised stones, the stones may be scratched to the bottom of the battery pack 200, and the bottom protection plate 100 is subjected to an impact force from the stones. With the impact-resistant layer 20 having certain strength, the bottom protection plate 100 can be prevented from being punctured when subjected to the external impact force. In addition, since the impact-resistant layer 20 has certain degree of toughness, the impact-resistant layer 20 may be deformed to a certain degree when subjected to the external impact force, thereby dispersing the external impact force to different positions.

Alternatively, in an embodiment, the impact-resistant layer 20 is a steel plate. To improve the impact resistance, the impact-resistant layer 20 may be made of super-strength steel, such as steel of the model DP1470.

As shown in FIG. 2 or FIG. 3, the bottom protection plate 100 of the present application further includes the energy-absorbing layer 30 capable of absorbing impact energy from the impact-resistant layer 20 to prevent the external impact force from being directly transmitted to the battery cores 220 in the battery pack 200, thereby improving the protective effect of the battery cores 220.

In the present embodiment, the energy-absorbing layer 30 may be made of any one or more of balsa wood, polyurethane foam with high-density, energy-absorbing material with metal porous (such as aluminum honeycomb, foamed aluminum), and high polymeric material (such as EVA foamed material). In any case, the energy-absorbing layer 30 may be made of material having certain deformation capability. As such, in a case that the external impact force is transmitted to the energy-absorbing layer 30, the energy-absorbing layer 30 may absorb the impact energy by self-deformation, thereby preventing the external impact force from being transmitted to the battery cores 220 in the battery pack 200.

As shown in FIG. 3 and FIG. 5, in the present embodiment, the energy-absorbing layer 30 is disposed between the first fiber-reinforced composite layer 11 and the impact-resistant layer 20, that is, the energy-absorbing layer 30 is closer to the battery cores 220 than the impact-resistant layer 20, so that the impact force on the impact-resistant layer 20 can be better prevented from being transmitted to the battery cores 220.

As above, it could be understood that in an embodiment of the present application, the bottom protection plate 100 includes the protective outer layer including the first fiber-reinforced composite layer 11 and the second fiber-reinforced composite layer 12, and the impact-resistant layer 20 and the energy-absorbing layer 30 are disposed between the first fiber-reinforced composite layer 11 and the second fiber-reinforced composite layer 12, so that the bottom protection plate 100 can have the effects insulation, wear resistance, puncture resistance, and can protect the impact-resistant layer 20 and the energy-absorbing layer 30 from corrosion. The impact-resistant layer 20 can resist the external impact force and disperse the external impact force concentrated at a certain position to different positions, so as to prevent foreign matters from directly puncturing the bottom protection plate 100. The energy-absorbing layer 30 can absorb the impact energy on the impact-resistant layer 20, so that the impact-resistant layer 20 is prevented from being greatly deformed or punctured, and the impact force is prevented from being transmitted to the battery cores 220 in the battery pack 200, thereby improving the protective effect of the battery cores 220.

Alternatively, in an embodiment, the energy-absorbing layer 30 is made of balsa wood. Balsa wood is one of the lightest lumbers in the world, weighing only 0.1 grams per cubic centimeter. The lightweight nature of balsa wood means that it can be more easily deformed upon the impact to absorb and disperse the impact energy. In addition, the microstructure of balsa wood has porosity, and these voids and channels can act as a " buffer area" for energy absorption and dispersion when subjected to the external impact, thereby slowing the transmission rate of the impact wave and reducing the damage effect of the impact energy on the material. Balsa wood is also able to elastically or plastically deform when subjected to the external impact, and the large amount of the impact energy is absorbed during the process of deformation. It should be noted that although the balsa wood is lightweight in texture, it is structurally strong and not easily completely damaged by the external impact. As such, the energy can be absorbed while maintaining certain structural integrity.

Therefore, in the present embodiment, the energy-absorbing layer 30 is made of balsa wood, not only can the impact energy on the impact-resistant layer 20 be better absorbed, but also the structure of the bottom protection plate 100 can be made more firm and not easily damaged.

Alternatively, in an embodiment, the protective outer layer 10, the impact-resistant layer 20 and the energy-absorbing layer 30 are compounded into the bottom protection plate 100 by the resin transfer molding process. **In** the present embodiment, the impact-resistant layer 20 is made of steel plate, the energy-absorbing layer 30 is made of balsa wood, and the protective outer layer 10, the impact-resistant layer 20, and the energy-absorbing layer 30 are compounded into the bottom protection plate 100 by a resin transfer molding process.

Herein, the resin transfer molding process is an advanced composite material molding technology, the basic principle of which is to inject the resin into the closed mold, infiltrate the reinforcing material, and cure and mold. During molding, the protective outer layer 10, the impact-resistant layer 20, and the energy-absorbing layer 30 may be laid in the cavity of the mold, and then the resin may be injected into the cavity at a predetermined pressure through the resin injection machine. The resin is sufficiently infiltrated under pressure between the fiber-reinforced material and the layers (i.e., the protective outer layer 10, the impact-resistant layer 20, and the energy-absorbing layer 30), cured under certain conditions, and finally released to obtain a molded composite article, i.e., to obtain the bottom protection plate 100.

It could be understood that by the resin transfer molding process, the resin can be sufficiently infiltrated between the first fiber-reinforced composite layer 11 and the energy-absorbing layer 30, between the energy-absorbing layer 30 and the impact-resistant layer 20, and between the impact-resistant layer 20 and the second fiber-reinforced composite layer 12, so that the layers in the bottom protection plate 100 can be firmly adhered together, thereby improving the structural strength and structural stability of the bottom protection plate 100.

It should be noted that to improve the composite effect of the layers in the bottom protection plate 100, a high-pressure resin transfer molding process (the pressure for injection is usually between 1.0 MPa and 6.0 MPa or higher) may be used.

Alternatively, in an embodiment, as shown in FIG. 2 and FIG. 3, the surface of the energy-absorbing layer 30 facing the impact-resistant layer 20 is concavely provided with a drainage channel 31. The drainage channel 31 penetrates to the outer peripheral surface of the energy-absorbing layer 30. The drainage channel 31 is provided to supply resin to flow between the energy-absorbing layer 30 and the impact-resistant layer 20.

In the present embodiment, as described above, the protective outer layer 10, the impact-resistant layer 20, and the energy-absorbing layer 30 are compounded into the bottom protection plate 100 by a resin transfer molding process, and in order to enable the resin to flow more fully between the energy-absorbing layer 30 and the impact-resistant layer 20, the energy-absorbing layer 30 is made of balsa wood, and the surface of the energy-absorbing layer 30 facing the impact-resistant layer 20 is concavely provided with a drainage channel 31. The drainage channel 31 is penetrates to the outer peripheral surface of the energy-absorbing layer 30, so that the resin can flow between the energy-absorbing layer 30 and the impact-resistant layer 20 through the drainage channel 31, that is, the resin can flow more fully between the energy-absorbing layer 30 and the impact-resistant layer 20, thereby improving the composite effect of the energy-absorbing layer 30 and the impact-resistant layer 20.

Alternatively, in an embodiment, as shown in FIG. 2 or FIG. 4, a plurality of drainage channels 31 is provided, and the plurality of drainage channels 31 is interconnected. It could be understood that by providing a plurality of drainage channels 31, more resin can be introduced between the energy-absorbing layer 30 and the impact-resistant layer 20, thereby improving the composite effect of the energy-absorbing layer 30 and the impact-resistant layer 20. By making the plurality of drainage channels 31 in staggered intercommunication, the efficiency of filling the drainage channels 31 with the resin can be improved to avoid portions of the drainage channels 31 from being not filled with the resin after molding. A "resin grid structure" can be formed between the energy-absorbing layer 30 and the impact-resistant layer 20 after the resin is solidified to improve the composite effect of the energy-absorbing layer 30 and the impact-resistant layer 20.

Here, it should be noted that the extension direction of the plurality of drainage channels 31 can be flexibly designed as required, for example, alternatively, in an embodiment, as shown in FIG. 4, in a case that the energy-absorbing layer 30 is rectangular plate-shaped and has a lengthwise direction and a widthwise direction, and the drainage channels 31 include a plurality of first drainage channels 311 and a plurality of second drainage channels 312; the first drainage channels 311 extend along the lengthwise direction of the energy-absorbing layer 30 and are spaced along the widthwise direction of the energy-absorbing layer 30, and the second drainage channels 312 extend along the widthwise direction of the energy-absorbing layer 30 and are spaced along the lengthwise direction of the energy-absorbing layer 30.

That is, in the present embodiment, the plurality of first drainage channels 311 and the plurality of second drainage channels 312 are staggered vertically and horizontally, and any one of the first drainage channels 311 and any one of the second drainage channels 312 are vertically crossed. As such, the arrangement of the plurality of drainage channels 31 is relatively simple, the machining is facilitated, and the spacing between the drainage channels 31 can be better set.

Further, in an embodiment, as shown in FIG. 4, the plurality of first drainage channels 311 is evenly spaced along the widthwise direction of the energy-absorbing layer 30, and/or the plurality of second drainage channels 312 is evenly spaced along the lengthwise direction of the energy-absorbing layer 30, so that the resin can be more evenly filled between the energy-absorbing layer 30 and the impact-resistant layer 20, and the composite strength of the energy-absorbing layer 30 and the impact-resistant layer 20 at each position can be more uniform, thereby ensuring that the energy-absorbing effect of the energy-absorbing layer 30 at each position is more uniform.

Alternatively, in an embodiment, the drainage channel 31 has a cross-section that defines a non-closed polygon with an opening on a side. In the present embodiment, the drainage channel 31 may be provided with a plurality of side walls connected end to end in sequence, but the first one of the side walls and the last one of the side walls are not connected, to provide the drainage channel 31 having a cross-section defining a non-closed polygon with an opening on a side.

The number of the side walls of the drainage channel 31 can be flexibly selected as required. For example, in an embodiment, as shown in FIG. 3, the drainage channel 31 is provided with two side walls arranged at an included angle, and the cross section of the drainage channel 31 is V-shaped. The drainage channel 31 is simple in structure and easy to process.

For another example, in another embodiment, the number of side walls of the drainage channel 31 may be three, two of the side walls are parallel and spaced from each other, and one of the side walls is vertically connected between the two side walls which are parallel to each other. At this time, the cross-section of the drainage channel 31 is in a square with an opening on a side.

Always, the number of the side walls of the drainage channel 31 and the included angle between the side walls can be flexibly selected as desired.

Alternatively, in another embodiment, the cross section of the drainage channel 31 is an arc-shape with a radian less than 360°, and the side walls of the drainage channel 31 extends in arc with a radian less than 360°, meanwhile defining the cross section of the drainage channel 31 with an arc-shape with a radian less than 360°. As such, the drainage channel 31 has an opening to lead the resin in the drainage channel 31 to be adhered to the impact-resistant layer 20.

The cross-section of the drainage channel 31 may be a semicircle, a semi ellipse, an arc-shape with a radian less than 90°, or the like.

In another embodiment, the cross-section of the drainage channel 31 may be of other shapes (e.g., irregular shape), and the specific shapes may be flexibly designed as desired.

Alternatively, in an embodiment, the thickness of the energy-absorbing layer 30 is not less than 5 mm and not greater than 10 mm, and the thickness may be 5 mm, 5.5 mm, 6 mm, 6.5 mm, 7 mm, 7.5 mm, 8 mm, 8.5 mm, 9 mm, 9.5 mm, 10 mm, etc.

It could be understood that in a case that the thickness of the energy-absorbing layer 30 is less than 5 mm, the energy-absorbing effect of the energy-absorbing layer 30 may be insufficient, and in a case that the thickness of the energy-absorbing layer 30 is greater than 10 mm, the bottom protection plate 100 may be relatively thick. Therefore, in the present embodiment, the thickness of the energy-absorbing layer 30 is not less than 5 mm and not greater than 10 mm, so that it is possible to ensure that the energy-absorbing layer 30 has a good buffering and energy-absorbing effect, and to avoid over thickness of the bottom protection plate 100.

It should be noted that, referring to FIG. 3, the thickness direction of the energy-absorbing layer 30 is the stacking direction of the first fiber-reinforced composite layer 11, the energy-absorbing layer 30, the impact-resistant layer 20, and the second fiber-reinforced composite layer 12.

Alternatively, in an embodiment, the impact-resistant layer 20 is made of metallic material and has a yield strength of not less than 1200 MPa. In the present embodiment, the impact-resistant layer 20 is made of DP1470 super-strength steel and has a yield strength of 1200 MPa or higher, so that the impact resistance of the impact-resistant layer 20 can be improved, thereby providing a better protective effect.

Alternatively, in an embodiment, the thickness of the impact-resistant layer 20 is not less than 1 mm and not greater than 2 mm, and the thickness may be 1 mm, 1.1 mm, 1.2 mm, 1.3 mm, 1.4 mm, 1.5 mm, 1.6 mm, 1.7 mm, 1.8 mm, 1.9 mm, 2 mm, etc.

It could be understood that in a case that the thickness of the impact-resistant layer 20 is less than 1 mm, the impact resistance of the impact-resistant layer 20 may be weaker, and in a case that the thickness of the impact-resistant layer 20 is greater than 2 mm, the weight and cost of the bottom protection plate 100 may be increased. Therefore, in the present embodiment, by making the thickness of the impact-resistant layer 20 not less than 1 mm and not greater than 2 mm, it is possible to ensure that the impact-resistant layer 20 has a good impact resistance, and to avoid excessive weight and cost of the bottom protection plate 100.

Alternatively, in an embodiment, the thickness of both the first fiber-reinforced composite layer 11 and the second fiber-reinforced composite layer 12 is not less than 0.6 mm and not greater than 2 mm, and the thickness may be 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, etc.

It could be understood that in a case that the thickness of the first fiber-reinforced composite layer 11 and the second fiber-reinforced composite layer 12 is less than 0.6 mm, it may result in poor corrosion prevention and poor puncture resistance to the protective outer layer 10, and in a case that the thickness of the first fiber-reinforced composite layer 11 and the second fiber-reinforced composite layer 12 is greater than 2 mm, it may increase the production difficulty. Therefore, in the present embodiment, by making the thickness of the first fiber-reinforced composite layer 11 and the second fiber-reinforced composite layer 12 not less than 0.6 mm and not greater than 2 mm, it is possible to ensure that the protective outer layer 10 has a good corrosion resistance and puncture resistance, and to facilitate the production of the first fiber-reinforced composite layer 11 and the second fiber-reinforced composite layer 12.

In embodiments of the present application, by providing the bottom protection plate including a protective outer layer having a first fiber-reinforced composite layer and a second fiber-reinforced composite layer, an impact-resistant layer and an energy-absorbing layer disposed between the first fiber-reinforced composite layer and the second fiber-reinforced composite layer, the bottom protection plate not only has the effects of insulation, wear resistance, and puncture resistance, but also can protect the impact-resistant layer and the energy-absorbing layer from corrosion. The impact-resistant layer can resist external impact force and disperse the external impact force concentrated at a certain position to various positions, to prevent foreign matters from directly puncturing the bottom protection plate. The energy-absorbing layer can absorb the impact energy on the impact-resistant layer, so that the impact-resistant layer is prevented from being greatly deformed or punctured, and the impact force is prevented from being transmitted to the battery cores in the battery pack, thereby improving the protective effect of the battery cores.

As shown in FIG. 5, an embodiment of the present application further provides a battery pack 200, the battery pack 200 includes a bottom protection plate 100 as described with reference to the above-described embodiments. Since the battery pack 200 employs all the technical solutions of the above-described embodiments, the battery pack 200 of the present application has at least all the beneficial effects of the technical solutions of the above-described embodiments, and details are not described herein.

It should be noted that, as shown in FIG. 5, the battery pack 200 generally includes a case 210 and a battery module mounted in the case 210. The battery module includes a plurality of battery cores 220. The bottom protection plate 100 in the present application can be directly used as a bottom plate in structure in the case 210, and the battery cores 220 are directly mounted on the bottom protection plate 100.

Alternatively, in another embodiment, the bottom of the case 210 is provided with a bottom plate, and the battery cores 220 are directly mounted on the bottom plate of the case 210. The bottom protection plate 100 in the present application is fixed to the bottom of the bottom plate of the case to protect the bottom of the battery cores 220 together with the bottom plate of the case 210.

An embodiment of the present application further provides a power-consuming device including the battery pack 200. Since the battery pack 200 employs all the technical solutions of the above embodiments, the power-consuming device of the present application has at least all the beneficial effects of the technical solutions of the above embodiments, and details are not described herein.

Herein, the power-consuming device may be an automobile, a ship, an industrial device, a household device, or the like.

The present application has been described in detail with reference to a bottom protection plate, a battery pack, and a power-consuming device. The principles and embodiments of the present application are described herein using specific examples. The description of the above embodiments is merely provided to help understand the technical solution and the core idea of the present application. It should be understood by those of ordinary skill in the art that modifications may still be made to the technical solutions described in the foregoing embodiments, or equivalents may be made to some of the technical features therein. These modifications or equivalents do not depart the essence of the corresponding technical solutions from the scope of the technical solutions of the embodiments of the present application.

## Claims

1. A bottom protection plate, **characterized by** comprising a protective outer layer (10), an impact-resistant layer (20), and an energy-absorbing layer (30); wherein the protective outer layer (10) comprises a first fiber-reinforced composite layer (11) and a second fiber-reinforced composite layer (12), the impact-resistant layer (20) is disposed between the first fiber-reinforced composite layer (11) and the second fiber-reinforced composite layer (12), and the energy-absorbing layer (30) is sandwiched between the first fiber-reinforced composite layer (11) and the impact-resistant layer (20).

2. The bottom protection plate of claim 1, wherein the energy-absorbing layer (30) is made of any one or more of balsa wood, polyurethane foam with high-density, energy-absorbing material with metal porous, and high polymeric material.

3. The bottom protection plate of claim 1, wherein a drainage channel (31) is concavely provided on a surface of the energy-absorbing layer (30) facing the impact-resistant layer (20), the drainage channel (31) penetrates to an outer peripheral surface of the energy-absorbing layer (30), and the drainage channel (31) is provided to supply resin to flow between the energy-absorbing layer (30) and the impact-resistant layer (20).

4. The bottom protection plate of claim 3, wherein a plurality of drainage channels (31) is provided, and the plurality of drainage channels (31) is in staggered intercommunication.

5. The bottom protection plate of claim 4, wherein the energy-absorbing layer (30) has a lengthwise direction and a widthwise direction, and the plurality of drainage channels (31) comprises a plurality of first drainage channels (311) and a plurality of second drainage channels (312); wherein the plurality of first drainage channels (311) extends along the lengthwise direction of the energy-absorbing layer (30) and is spaced along the widthwise direction; and the plurality of second drainage channels (312) extends along the widthwise direction of the energy-absorbing layer (30) and is spaced along the lengthwise direction.

6. The bottom protection plate of claim 5, wherein the plurality of first drainage channels (311) is evenly spaced along the widthwise direction, and/or the plurality of second drainage channels (312) is evenly spaced along the lengthwise direction.

7. The bottom protection plate of claim 3, wherein a cross section of the drainage channel (31) is non-closed polygon with an opening on a side, or the cross section of the drainage channel is an arc-shape with radian less than 360°.

8. The bottom protection plate of claim 3, wherein a cross section of the drainage channel (31) is a V-shape.

9. The bottom protection plate of any one of claims 1 to 8, wherein a thickness of the energy-absorbing layer (30) is not less than 5 mm and not greater than 10 mm.

10. The bottom protection plate of any one of claims 1 to 8, wherein the impact-resistant layer (20) is made of metallic material, and a yield strength of the impact-resistant layer is not less than 1200 MPa.

11. The bottom protection plate of any one of claims 1 to 8, wherein a thickness of the impact-resistant layer (20) is not less than 1 mm and not greater than 2 mm.

12. The bottom protection plate of any one of claims 1 to 8, wherein a thickness of the first fiber-reinforced composite layer (11) and the second fiber-reinforced composite layer (12) is not less than 0.6 mm and not greater than 2 mm.

13. The bottom protection plate of any one of claims 1 to 8, wherein the protective outer layer (10), the impact-resistant layer (20), and the energy-absorbing layer (30) are compounded into the bottom protection plate (100) by resin transfer molding process.

14. A battery pack, **characterized by** comprising the bottom protection plate (100) of any one of claims 1 to 13.

15. A power-consuming device, **characterized by** comprising the battery pack (200) of claim 14.
